# EUROPEAN PATENT SPECIFICATION

(11) **EP 3 135 427 B1**
(45) Date of publication and mention of the grant of the patent: **24.05.2023**
(21) Application number: 16181213.6
(22) Date of filing: 26.07.2016
(51) Int. Cl.: B23P 6/00, F01D 5/00, F04D 29/64, F04D 29/54, F01D 5/28, F01D 9/04, F01D 21/00, G01B 21/04

(54) **METHOD, APPARATUS AND COMPUTER PROGRAM FOR REPAIRING AEROFOILS OF GAS TURBINE ENGINES**
VERFAHREN, VORRICHTUNG UND COMPUTERPROGRAMM ZUR REPARATUR VON TRAGFLÜGELN VON GASTURBINENMOTOREN
PROCÉDÉ, APPAREIL ET PROGRAMME INFORMATIQUE POUR RÉPARER DES AUBES DE MOTEURS DE TURBINE À GAZ

(30) Priority: 19.08.2015 GB 201514724
(43) Date of publication of application: 01.03.2017
(73) Proprietor: Rolls-Royce plc, London N1 9FX (GB)
(72) Inventor: Foulkes, Mark, Derby, Derbyshire DE24 8BJ (GB); Harding, Adrian, Derby, Derbyshire DE24 8BJ (GB); Tucker, David, Derby, Derbyshire DE24 8BJ (GB); Wright, Gary, Derby, Derbyshire DE24 8BJ (GB)
(74) Representative: Rolls-Royce plc

(56) References cited:
- EP-A1- 1 348 833
- EP-A2- 1 760 427
- EP-A2- 2 540 962
- EP-A2- 2 623 720
- US-A1- 2006 078 422
- US-A1- 2008 267 775

## Description

### TECHNOLOGICAL FIELD

The present disclosure concerns methods, apparatus, and computer programs for repairing aerofoils of gas turbine engines.

### BACKGROUND

Gas turbine engines include various aerofoils for directing a flow of gas through the gas turbine engine and/or for extracting torque from the flow of gas. For example, gas turbine engines usually include the following aerofoils: compressor blades, turbine blades, nozzle guide vanes, and stator vanes. Such aerofoils are usually mounted between radially inner platforms and radially outer platforms and the area defined by the trailing edges of two adjacent aerofoils and the radially inner and outer platforms may be referred to as a 'throat area'.

Aerofoils for gas turbine engines are usually coated to help protect the aerofoils from the relatively hostile environment in which they operate. For example, the coating on an aerofoil may help protect the aerofoil from high temperatures, contamination and erosion.

In operation of the gas turbine engine, the coatings on aerofoils may become damaged due to the above mentioned hostile environment. Current repair techniques involve machining the aerofoil and then providing a coating to the machined aerofoil to replace the coating removed by machining. However, the machining of the aerofoil may remove material from the aerofoil (in addition to the coating) which may increase the throat area defined by the machined aerofoil and thereby reduce the performance of the gas turbine engine.

EP2540962, disclosing a method according to the preamble of claim 1, relates to a method for forming a nozzle segment for a turbine stage of a gas turbine engine to a specific measurement range for a throat area. The nozzle segment comprising an inner platform, and outer platform, and a plurality of airfoils between the inner platform and outer platform. A requested throat area measurement is obtained for the nozzle segment, and a starting stacking angle for a plurality of through holes and pockets corresponding to the airfoils for both the inner platform and outer platform is selected, which are then machined. The airfoils, inner platform, and outer platform are assembled to form the nozzle segment that is machined to obtain a finished throat area. The finished throat area is measured, and a determination is made if the measured finish throat area complies with the requested throat area.

US2006/078422 relates to a method of modifying a turbine nozzle area comprises depositing a thermal barrier coating on the nozzle endwalls to provide a minimum nozzle area, evaluating an airflow through the nozzle, and machining the TBC to increase the nozzle area. Adjacent segment area variation may be minimized, improving engine reliability by reducing the aerodynamic excitation to the downstream blade.

### BRIEF SUMMARY

According to the invention there is provided a method of repairing a part of a gas turbine engine, the part including a first aerofoil, a second aerofoil, a first platform, and a second platform, the method comprising:
controlling machining of at least one of: the first aerofoil and the second aerofoil;
the machining causing an increase in a throat area defined by the first aerofoil, the second aerofoil, the first platform and the second platform, the first aerofoil and the second aerofoil being arranged to couple to the first platform and to the second platform, the first platform including a body and a coating, the coating having a first thickness (D2); and
providing a coating from coating apparatus selected from the group comprising thermal spray apparatus, air plasma spray apparatus, electroplating apparatus, electron beam physical vapour deposition apparatus, high velocity oxygen fuel coating apparatus; and
controlling provision of a the coating to the first platform subsequent to controlling machining to provide the coating of the first platform with a second thickness (D2') and to reduce the throat area, the second thickness (D2') being greater than the first thickness (D2).

The coating may comprise a thermal barrier coating. The coating may comprise yttria-stabilised zirconia.

Additionally or alternatively, the coating may comprise a bond coating. The coating may comprise: platinum, or platinum aluminide, or MCrAl, where M is one or any combination of nickel, cobalt and iron.

The coating may have a thickness greater than two hundred and fifty micrometers. The coating may have a thickness greater than three hundred micrometers. The coating may have a thickness greater than four hundred micrometers.

The method may further comprise: receiving information on the positioning of the first aerofoil, the second aerofoil, the first platform and the second platform subsequent to controlling machining; and determining the throat area using the received information.

The method may further comprise controlling provision of a coating to at least one of the first aerofoil and the second aerofoil subsequent to controlling machining to reduce the throat area.

The method may further comprise controlling provision of an object to the first platform, and/or the second platform, and/or the first aerofoil, and/or the second aerofoil.

Controlling provision of the object may be performed prior to controlling provision of the coating. The method may further comprise controlling provision of the coating to the object.

The object may be provided to the first platform, and/or the second platform, and/or the first aerofoil, and/or the second aerofoil to cause wakes within gas flow between the first aerofoil, the second aerofoil, the first platform, and the second platform.

The first aerofoil, the second aerofoil, the first platform, and the second platform may form part of a compressor of a gas turbine engine, or may form part of a turbine of a gas turbine engine.

The first aerofoil and the second aerofoil may be one of: compressor blades; nozzle guide vanes; stator vanes; and turbine blades.

According to the invention there is provided apparatus for repairing an aerofoil of a gas turbine engine, the apparatus comprising: a controller a machine tool, a sensor and a coating apparatus to perform the method as described in any of the preceding paragraphs.

According to the invention there is provided a computer program that, when read by a computer, causes the apparatus to perform the method as described in any of the preceding paragraphs.

### BRIEF DESCRIPTION

Embodiments will now be described by way of example only, with reference to the Figures, in which:
Fig. 1 illustrates a schematic diagram of apparatus for repairing aerofoils according to various examples;
Fig. 2 illustrates a flow diagram of a method of repairing aerofoils according to various examples;
Fig. 3 illustrates a perspective diagram of a part of a gas turbine engine according to various examples;
Fig. 4 illustrates a further perspective diagram of the part of the gas turbine engine illustrated in Fig. 3;
Figs. 5A, 5B and 5C illustrate cross sectional diagrams of a platform during stages of repair of an aerofoil according to various examples;
Figs. 6A, 6B, 6C illustrate cross sectional diagrams of an aerofoil during repair according to various examples; and
Fig. 7 illustrates a cross sectional side view of a gas turbine engine according to various examples.

### DETAILED DESCRIPTION

In the following description, the terms 'connected' and 'coupled' mean operationally connected and coupled. It should be appreciated that there may be any number of intervening components between the mentioned features, including no intervening components.

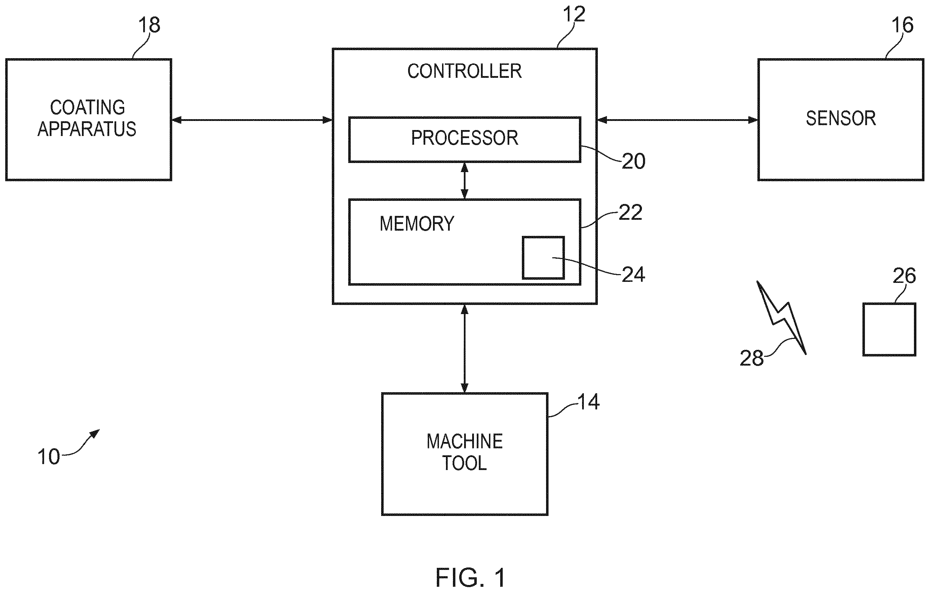

Fig. 1 illustrates a schematic diagram of an apparatus 10 for repairing an aerofoil of a gas turbine engine according to various examples. The apparatus 10 includes a controller 12, machine tool 14, a sensor 16, and coating apparatus 18. In some examples, the apparatus 10 may be a module. As used herein, the wording 'module' refers to a device or apparatus where one or more features are included at a later time, and possibly, by another manufacturer or by an end user. For example, where the apparatus 10 is a module, the apparatus 10 may only include the controller 12, and the remaining features (such as the machine tool 14, the sensor 16 and the coating apparatus 18) may be added by another manufacturer, or by an end user.

The controller 12, the machine tool 14, the sensor 16, and the coating apparatus 18 may be coupled to one another via a wireless link and may consequently comprise radio frequency circuitry (such as a transceiver) and one or more antennas. Additionally or alternatively, the controller 12, the machine tool 14, the sensor 16, and the coating apparatus 18 may be coupled to one another via a wired link and may consequently comprise interface circuitry (such as a Universal Serial Bus (USB) socket). It should be appreciated that the controller 12, the machine tool 14, the sensor 16, and the coating apparatus 18 may be coupled to one another via any combination of wired and wireless links.

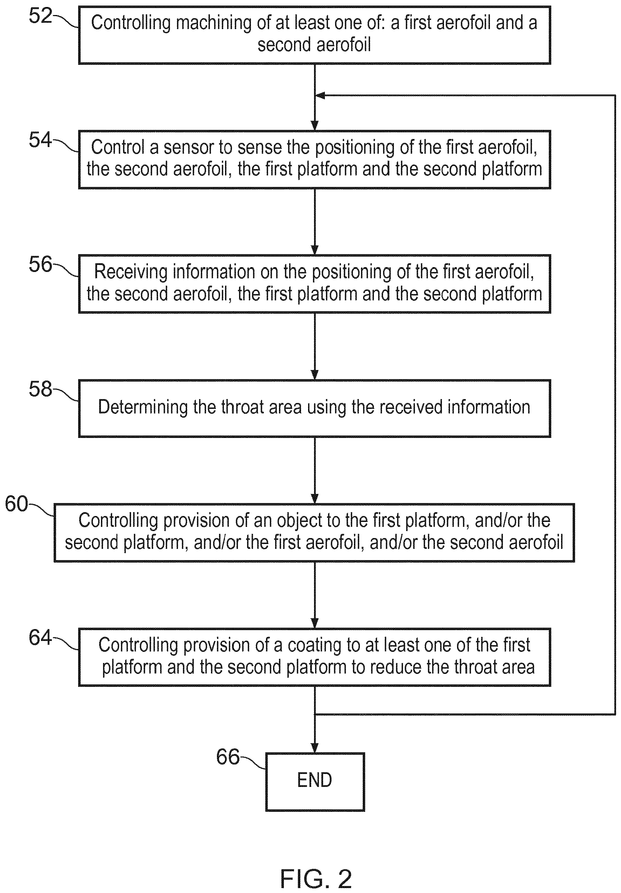

The controller 12 may comprise any suitable circuitry to cause performance of the methods described herein and as illustrated in Fig. 2. The controller 12 may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

By way of an example, the controller 12 may comprise at least one processor 20 and at least one memory 22. The memory 22 stores a computer program 24 comprising computer readable instructions that, when read by the processor 20, causes performance of the methods described herein, and as illustrated in Fig. 2. The computer program 24 may be software or firmware, or may be a combination of software and firmware.

The processor 20 may include at least one microprocessor and may comprise a single core processor, may comprise multiple processor cores (such as a dual core processor or a quad core processor), or may comprise a plurality of processors (at least one of which may comprise multiple processor cores). The processor 20 may be located at a single location or may be located across multiple locations.

The memory 22 may be any suitable non-transitory computer readable storage medium, data storage device or devices, and may comprise a hard disk and/or solid state memory (such as flash memory). The memory 22 may be permanent non-removable memory, or may be removable memory (such as a universal serial bus (USB) flash drive or a secure digital (SD) card). The memory 22 may be located at a single location or may be located across multiple locations.

The computer program 24 may be stored on a non-transitory computer readable storage medium 26. The computer program 24 may be transferred from the non-transitory computer readable storage medium 26 to the memory 22. The non-transitory computer readable storage medium 26 may be, for example, a USB flash drive, a secure digital (SD) card or an optical disc (such as a compact disc (CD), a digital versatile disc (DVD) or a Blu-ray disc). In some examples, the computer program 24 may be transferred to the memory 22 via a signal 28 (which may be a wireless signal or a wired signal).

The machine tool 14 may comprise any suitable tool or tools for removing material from a component of a gas turbine engine. For example, the machine tool 14 may comprise a blending tool, and/or a milling tool, and/or a water jet, and/or an electrical discharge machining (EDM) tool, and/or an ultrasonic machining tool. In some examples, the machine tool 14 may comprise chemical etching apparatus. The controller 12 is configured to control the operation of the machine tool 14.

The sensor 16 may comprise any suitable device or devices for measuring a throat area between two aerofoils of a gas turbine engine. For example, the sensor 16 may comprise a three dimensional (3D) scanner, which may be a contact three dimensional scanner (such as a Co-ordinate Measuring Machine (CMM)) or a noncontact three dimensional scanner (such as a light, ultrasound or x-ray scanner). The controller 12 is configured to control the operation of the sensor 16 and to receive information from the sensor 16.

The coating apparatus 18 may comprise any suitable device for providing a coating to a component of a gas turbine engine. For example, the coating apparatus 18 may comprise thermal spray apparatus, air plasma spray apparatus, electroplating apparatus, electron beam physical vapour deposition apparatus, high velocity oxygen fuel coating apparatus. The coating apparatus 18 may be configured to provide a thermal barrier coating (such as yttria-stabilised zirconia) and/or to provide a bond coating such as platinum, platinum aluminide, or an alloy of MCrAlY, where M is one or any combination of nickel, cobalt and iron (such as CoNiCrAlY). The controller 12 is configured to control the operation of the coating apparatus 18 to provide one or more layers of coating to a component of a gas turbine engine.

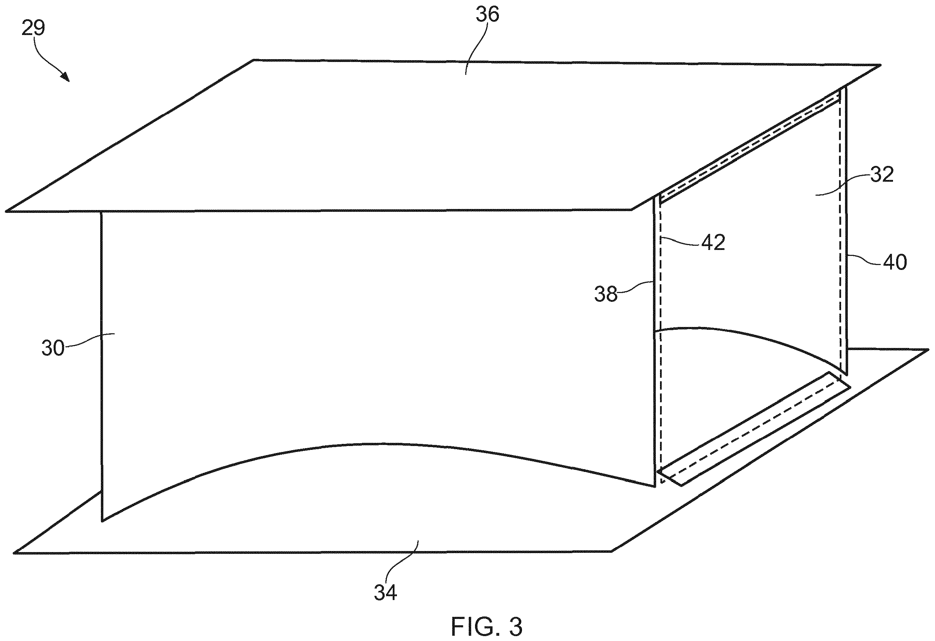

Fig. 2 illustrates a flow diagram of a method of repairing aerofoils according to various examples. The method illustrated in Fig. 2 is described with reference to Figs. 3, 4, 5A, 5B, 5C, 6A, 6B, and 6C.

Fig. 3 illustrates a perspective view of a part 29 of a gas turbine engine that includes a first aerofoil 30, a second aerofoil 32, a first platform 34, and a second platform 36. The part 29 may be a portion of a compressor of a gas turbine engine or a portion of a turbine of a gas turbine engine. The first aerofoil 30 may be any one of: a compressor blade, a turbine blade, a stator vane or a nozzle guide vane. The second aerofoil 32 may be any one of: a compressor blade, a turbine blade, a stator vane, or a nozzle guide vane. The gas turbine engine may include a plurality of the parts 29 which may be integral or separate to one another. Additionally, it should be appreciated that the part 29 may include any number of aerofoils retained on the first platform 34 and the second platform 36. For example, the part 29 may have three or four aerofoils retained on the first platform 34 and the second platform 36.

The first platform 34 may be arranged to receive and retain the first aerofoil 30 and the second aerofoil 32. For example, the first platform 34 may comprise cavities (such as 'fir tree' cavities) for receiving roots (such as 'fir tree' roots) of the first and second aerofoils 30, 32. Alternatively, the first and second aerofoils 30, 32 may be integral with the first platform 34 (for example, the first and second aerofoils 30, 32 may be diffusion bonded to the first platform 34). The second platform 36 may be arranged to receive and retain the first aerofoil 30 and the second aerofoil 32. Alternatively, the first and second aerofoils 30, 32 may be integral with the second platform 36 (for example, the first and second aerofoils 30, 32 may be joined to the platforms 34, 36 via brazing, welding or may form a mechanical joint where an aerofoil is joined to a platform via a cast-in mechanical lock).

The trailing edge 38 of the first aerofoil 30, the trailing edge 40 of the second aerofoil 32, the first platform 34 and the second platform 36 define a throat area 42 (indicated by dotted lines in Fig. 3). It should be appreciated that a gas turbine engine includes a plurality of such throat areas between the various aerofoils and the platforms to which they are coupled.

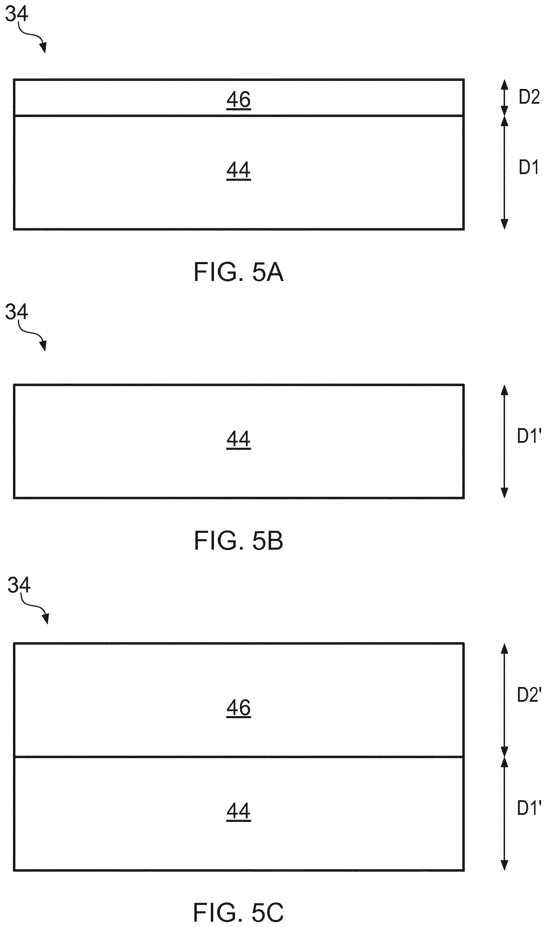

Fig. 5A illustrates a cross sectional side view of the first platform 34 at the throat area 42 prior to the performance of the method illustrated in Fig. 2. The first platform 34 includes a body 44 having a thickness D1 (where D1 is of the order of a few millimeters) and a coating 46 having a thickness D2 (where D2 is less than two hundred micrometers). The body 44 and the coating 46 may comprise different materials. For example, the body 44 may comprise a nickel superalloy such as CM247LC, MarM002, or a single-crystal alloy such as CMSX-3, CMSX-4, and so on and the coating 46 may comprise a thermal barrier coating (such as yttria-stabilised zirconia) and/or a bond coating such as platinum, platinum aluminide, or an alloy of MCrAlY, where M is one or any combination of nickel, cobalt and iron (such as CoNiCrAlY)..

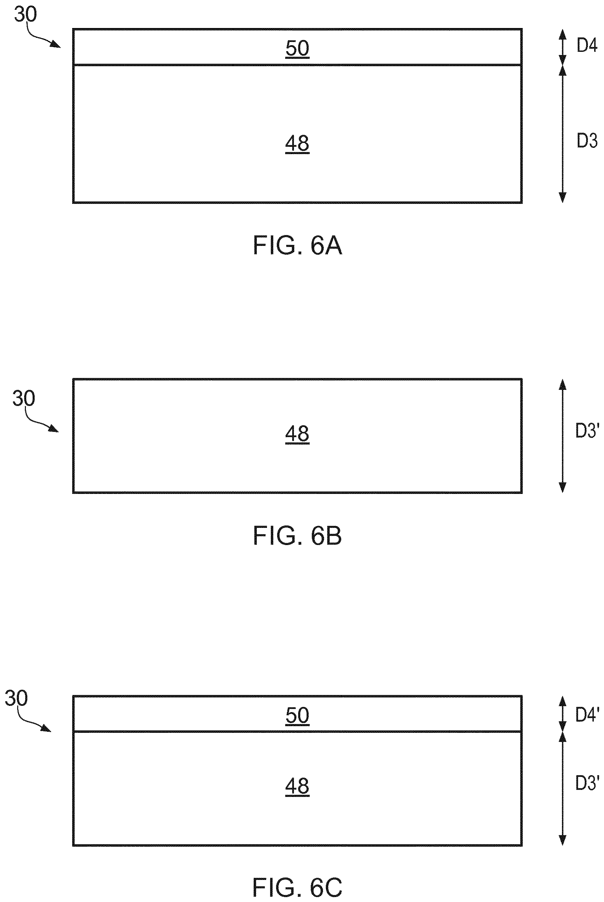

Fig. 6A illustrates a cross sectional side view of the first aerofoil 30 at the throat area 42 prior to the performance of the method illustrated in Fig. 2. The first aerofoil 30 includes a body 48 having a thickness D3 (where D3 is of the order of a few millimetres) and a coating 50 having a thickness D5 (where D4 is less than two hundred micrometers). The body 48 and the coating 50 may comprise different materials. For example, the body 48 may comprise a nickel superalloy such as CM247LC, MarM002, or a single-crystal alloy such as CMSX-3, CMSX-4, and so on, and the coating 50 may comprise a thermal barrier coating (such as yttria-stabilised zirconia) and/or a bond coating such as platinum, platinum aluminide, or an alloy of MCrAlY, where M is one or any combination of nickel, cobalt and iron (such as CoNiCrAlY).

At block 52, the method includes controlling machining of at least one of: the first aerofoil 30 and the second aerofoil 32. For example, the controller 12 may control the machine tool 14 to machine the first aerofoil 30 and/or the second aerofoil 32. The method may also include controlling machining of the first platform 34 and/or the second platform 36 at block 52.

Prior to controlling machining, the controller 12 may control the sensor 16 to inspect the first aerofoil 30, the second aerofoil 32, the first platform 34, and the second platform 36 to generate information on the condition of the first aerofoil 30, the second aerofoil 32, the first platform 34 and the second platform 36. The controller 12 may use the generated information to create a machining path along which the machine tool 14 may be moved to machine the first aerofoil 30, the second aerofoil 32, the first platform 34 and the second platform 36 at block 52.

Fig. 5B illustrates a cross sectional side view of the first platform 34 at the throat area 42 subsequent to the performance of block 52 (that is, after machining has been performed). In this example, not in accordance with the claims, the body 44 has a thickness D1' that is less than the thickness D1 of the body 44 prior to the performance of block 52. In this example, not in accordance with the claims, the coating 46 has been removed by the performance of block 52.

Fig. 6B illustrates a cross sectional side view of the first aerofoil 30 at the throat area 42 subsequent to the performance of block 52. The body 48 has a thickness D3' that is less than the thickness D3 of the body 48 prior to the performance of block 52. The coating 46 has been removed by the performance of block 52.

At block 54, the method includes controlling the sensor 16 to sense the positioning of the first aerofoil 30, the second aerofoil 32, the first platform 34 and the second platform 36. For example, the controller 12 may control the operation of the sensor 16 to sense the position of the surfaces of the first aerofoil 30, the second aerofoil 32, the first platform 34 and the second platform 36.

At block 56, the method includes receiving information on the positioning of the first aerofoil 30, the second aerofoil 32, the first platform 34 and the second platform 36. For example, the controller 12 may receive information on the positioning of the first aerofoil 30, the second aerofoil 32, the first platform 34 and the second platform 36 and store the received information in the memory 22. The received information may include co-ordinates for a plurality of points on the surfaces of the first aerofoil 30, the second aerofoil 32, the first platform 34 and the second platform 36. In some examples, the controller 12 may use the received information to generate a two dimensional model or a three dimensional model of the part 29. The generated model of the part 29 may be stored in the memory 22 and displayed to an engineer via an output device of the apparatus 10 such as a liquid crystal display (LCD) or a light emitting diode (LED) display.

At block 58, the method includes determining the throat area 42 using the information received at block 56. For example, the controller 12 may read the received information from the memory 22 to obtain the co-ordinates of the surfaces defining the throat area 42 and then determine the size of the throat area 42 using the obtained co-ordinates. The controller 12 may use the determined size of the throat area 42 and an optimal size for the throat area 42 (stored in the memory 22) to determine what addition of material may be used to reduce the size of the throat area 42 and thereby bring the size of the throat area 42 towards, or equal to, the optimal size for the throat area 42.

At block 60, the method may include controlling provision of one or more objects to the first platform 34, and/or the second platform 36, and/or the first aerofoil 30, and/or the second aerofoil 32. The objects may have any suitable shape or shapes (such as pips, lines, chevrons, arcs, rectangles and so on). The objects are arranged to reduce the throat area 42 and/or to cause wakes in the flow of gas through the part 29 and thereby reduce the capacity of the part 29 to compensate for the increase in the throat area 42 caused by the machining performed at block 52.

The objects may be formed through the addition of braze and/or weld and/or ceramics to the part 29. Additionally or alternatively, the objects may be preformed (through sintering for example) and then coupled to the part 29 through welding or brazing for example. The design and location of the objects may be generated using the determined addition of material from block 58. The controller 12 may be configured to control the provision of the one or more objects to the part 29 (for example, through controlling the machine tool 14 to provide the objects).

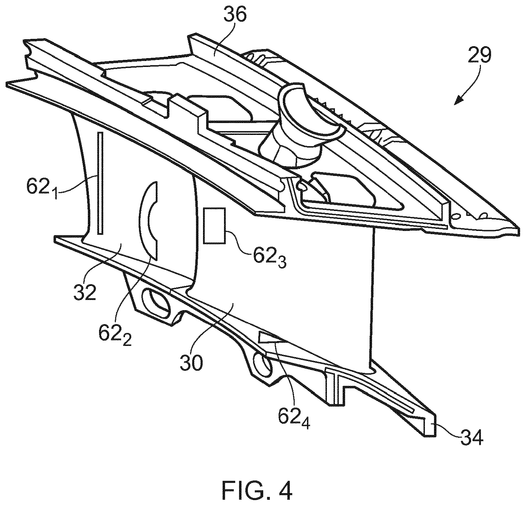

Fig. 4 illustrates a further perspective diagram of the part 29 illustrated in Fig. 3 including a plurality of objects 62 on the part 29 in accordance with block 60. In more detail, the part 29 includes a first object 62₁ having a line shape, a second object 62₂ having a chevron shape, a third object 62₃ having a rectangular shape, and a fourth object 62₄ having a triangular shape. The first object 62₁ is provided on the second aerofoil 32, the second object 62₂ is provided on the second aerofoil 34, the third object 62₃ is provided on the first aerofoil 30, and the fourth object 62₄ is provided on the first platform 34.

At block 64, the method includes controlling provision of a coating to at least one of the first platform 34 and the second platform 36 to reduce the throat area 42. For example, the controller 12 may control the coating apparatus 18 to provide a coating to the first platform 34 and/or to the second platform 36. In some examples, the controller 12 may use the determined addition of material from block 58 to determine the thickness coating to apply to the first platform 34 and/or the second platform 36 at the throat area 42. In other examples, the controller 12 may control the coating apparatus 18 to provide a fixed thickness of coating to the first platform 34 and/or the second platform 36.

Additionally, the method may include controlling provision of a coating to at least one of the first aerofoil 30 and the second aerofoil 32 at block 64 to reduce the throat area. Where the method includes controlling provision of one or more objects to the part 29 at block 60, the method may include controlling provision of the object prior to controlling provision of the coating (that is, block 60 may be performed prior to block 64), and the method may include controlling provision of the coating to the one or more objects. In other examples, block 60 may be performed subsequent to block 64 (that is, the one or more objects are coupled to the part 29 subsequent to the provision of coating to the part 29).

Fig. 5C illustrates a cross sectional side view of the first platform 34 at the throat area 42 subsequent to the performance of block 64 in Fig. 2. In this example, not in accordance with the claims, the body 44 has a thickness D1' that is less than the thickness D1 of the body 44 prior to the performance of block 52. According to the invention, the coating 46 added by block 64 has a thickness D2' that is greater than the thickness D2 of the coating prior to the machining performed in block 52. The thickness D2' of the coating 46 may be equal to or greater than two hundred and fifty micrometers, may be equal to or greater than three hundred micrometers, or may be equal to or greater than four hundred micrometers. The thickness D2' of the coating 46 may have an upper limit of one millimeter. In some examples, the coating 46 may have an upper limit of six hundred micrometers.

It should be appreciated that where the coating 46 is not removed in block 52 (or is only partially removed), the coating 46 provided in block 64 may be provided on the existing coating of the first platform 34 to provide a coating having a depth of D2'.

The application of a relatively thick layer of coating on one or both of the platforms 34, 36 at the throat area 42 is advantageous because the platforms 34, 36 may suffer less from delamination of the coating 46 due to the flow of gas than the first and second aerofoils 30, 32. In particular, the platforms 34, 36 are located in regions of the gas path that may have lower temperatures and cause less erosion, relative to the regions in which the aerofoils 30, 32 are located. Additionally, the increase in thickness of the coating 46 on one or both of the platforms 34, 36 may increase the longevity of the throat area 42 and thus increase the service life of the part 29.

Fig. 6C illustrates a cross sectional side view of the first aerofoil 30 at the throat area 42 subsequent to the performance of block 64. The body 48 has a thickness D3' that is less than the thickness D3 of the body 48 prior to the performance of block 52. The coating 50 provided in block 64 has a thickness of D4' which may be equal to (or similar to) the thickness D4 of the coating 50 prior to machining in block 52.

The method may then proceed to block 66 and end. In other examples, the method may return to block 54 to determine whether the coating applied to the part 29 has sufficiently reduced the throat area 42. For example, where the throat area 42 is measured to be outside of a range of throat areas centred on the stored optimal throat area 42, the method may proceed again through blocks 60 and 62 to apply additional coating to the first platform 34 and/or the second platform 36 to further reduce the throat area 42.

The method illustrated in Fig. 2 and described above is advantageous in that the application of a relatively thick layer of coating to one or both of the first and second platforms 34, 36 may enable the throat area 42 to be restored despite material being removed during the repair of one or both of the aerofoils 30, 32. The restoration of the throat area 42 may advantageously enable a greater percentage of aerofoils 30, 32 to be repaired instead of being discarded and may consequently reduce the cost of servicing a gas turbine engine. Additionally, the restoration of the throat area 42 may result in the operational performance of the gas turbine engine being maintained.

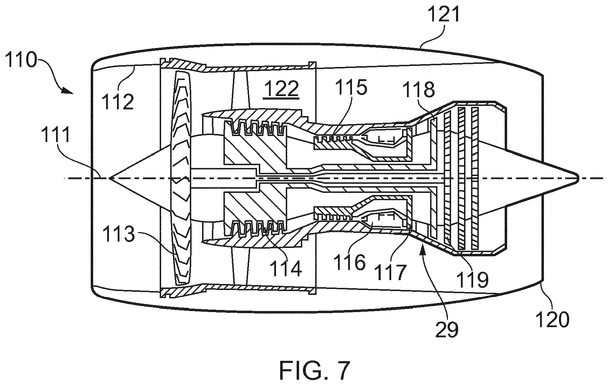

Fig. 7 illustrates a cross sectional side view of a gas turbine engine 110 according to various examples. The gas turbine engine 110 has a principal and rotational axis 111 and comprises, in axial flow series, an air intake 112, a propulsive fan 113, an intermediate pressure compressor 114, a high-pressure compressor 115, combustion equipment 116, a high-pressure turbine 117, and intermediate pressure turbine 118, a low-pressure turbine 119 and an exhaust nozzle 120. A nacelle 121 generally surrounds the engine 110 and defines both the intake 112 and the exhaust nozzle 120.

The gas turbine engine 110 operates so that air entering the intake 112 is accelerated by the fan 113 to produce two air flows: a first air flow into the intermediate pressure compressor 114 and a second air flow which passes through a bypass duct 122 to provide propulsive thrust. The intermediate pressure compressor 114 compresses the air flow directed into it before delivering that air to the high pressure compressor 115 where further compression takes place.

The compressed air exhausted from the high-pressure compressor 115 is directed into the combustion equipment 116 where it is mixed with fuel and the mixture is combusted. The resultant hot combustion products then expand through, and thereby drive the high, intermediate and low-pressure turbines 117, 118, 119 before being exhausted through the nozzle 120 to provide additional propulsive thrust. The high 117, intermediate 118 and low 119 pressure turbines drive respectively the high pressure compressor 115, intermediate pressure compressor 114 and fan 113, each by suitable interconnecting shaft.

The gas turbine engine 110 includes one or more parts 29 repaired according to the method illustrated in Fig. 2 and described in the above paragraphs. Consequently, the gas turbine engine 110 includes one or more platforms having a relatively thick layer of coating (that is, greater than two hundred and fifty micrometers, or greater than three hundred micrometers, or greater than four hundred micrometers) that at least partially restores an adjacent throat area.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Except where mutually exclusive, any of the features may be employed separately or in combination with any other features and the disclosure extends to and includes all combinations and sub-combinations of one or more features described herein within the scope of the claims.

## Claims

1. A method of repairing a part (29) of a gas turbine engine, the part including a first aerofoil (30), a second aerofoil (32), a first platform (34), and a second platform (36), the method comprising:
controlling machining of at least one of: the first aerofoil (30) and the second aerofoil (32); **characterized by**
the machining causing an increase in a throat area (42) defined by the first aerofoil (30), the second aerofoil (32), the first platform (34) and the second platform (36), the first aerofoil (30) and the second aerofoil (32) being arranged to couple to the first platform (34) and to the second platform (36), the first platform (34) including a body (44) and a coating (46), the coating (46) having a first thickness (D2);
providing a coating from coating apparatus selected from the group comprising thermal spray apparatus, air plasma spray apparatus, electroplating apparatus, electron beam physical vapour deposition apparatus, high velocity oxygen fuel coating apparatus; and
controlling provision of the coating to the first platform (34) subsequent to controlling machining to provide the coating (46) of the first platform (34) with a second thickness (D2') and to reduce the throat area (42), the second thickness (D2') being greater than the first thickness (D2).

2. A method as claimed in claim 1, wherein the coating (46) comprises a thermal barrier coating.

3. A method as claimed in claim 2, wherein the coating (46) comprises yttria-stabilised zirconia.

4. A method as claimed in any of the preceding claims, wherein the coating (46) comprises a bond coating.

5. A method as claimed in claim 4, wherein the coating (46) comprises: platinum, or platinum aluminide, or MCrAlY, where M is one or any combination of nickel, cobalt and iron.

6. A method as claimed in any of the preceding claims, further comprising:
receiving information on the positioning of the first aerofoil (30), the second aerofoil (32), the first platform (34) and the second platform (36) subsequent to controlling machining; and determining the throat area (42) using the received information.

7. A method as claimed in any of the preceding claims, further comprising controlling provision of a coating (46) to at least one of the first aerofoil (30) and the second aerofoil (32) subsequent to controlling machining to reduce the throat area (42).

8. A method as claimed in any of the preceding claims, further comprising controlling provision of an object (62) to the first platform (34), and/or the second platform (36), and/or the first aerofoil (30), and/or the second aerofoil (32).

9. A method as claimed in claim 8, wherein controlling provision of the object (62) is performed prior to controlling provision of the coating (46), and further comprising controlling provision of the coating (46) to the object (62).

10. Apparatus (10) for repairing an aerofoil of a gas turbine engine, the apparatus comprising: a controller (12), a machine tool (14), a sensor (16), and coating apparatus (18) configured to perform the method as claimed in any of the preceding claims.

11. A computer program (24) that, when read by a computer, causes the apparatus of claim 10 to perform the method as claimed in any of claims 1 to 9.

## Patentansprüche

1. Verfahren zum Reparieren eines Teils (29) eines Gasturbinentriebwerks, wobei der Teil ein erstes Schaufelprofil (30), ein zweites Schaufelprofil (32), eine erste Plattform (34) und eine zweite Plattform (36) enthält, wobei das Verfahren umfasst:
Steuern eines maschinellen Bearbeitens von mindestens einem von: dem ersten Schaufelprofil (30) und dem zweiten Schaufelprofil (32); **gekennzeichnet durch**
Bewirken durch das maschinelle Bearbeiten einer Vergrößerung einer Durchlassfläche (42), die durch das erste Schaufelprofil (30), das zweite Schaufelprofil (32), die erste Plattform (34) und die zweite Plattform (36) definiert ist, wobei das erste Schaufelprofil (30) und das zweite Schaufelprofil (32) so angeordnet sind, dass sie sich mit der ersten Plattform (34) und der zweiten Plattform (36) verbinden, wobei die erste Plattform (34) einen Körper (44) und eine Beschichtung (46) enthält, wobei die Beschichtung (46) eine erste Dicke (D2) aufweist;
Bereitstellen einer Beschichtung von einer Beschichtungsvorrichtung, die aus der Gruppe ausgewählt ist, die eine thermische Spritzvorrichtung, Luftplasmaspritzvorrichtung, Galvanisiervorrichtung, eine physikalische Elektronenstrahl-Dampfabscheidungsvorrichtung, Hochgeschwindigkeitsflammbeschichtungsvorrichtung umfasst; und
Steuern einer Bereitstellung der Beschichtung auf der ersten Plattform (34) nach dem Steuern des maschinellen Bearbeitens, um die Beschichtung (46) der ersten Plattform (34) mit einer zweiten Dicke (D2') bereitzustellen und die Durchlassfläche (42) zu reduzieren, wobei die zweite Dicke (D2') größer als die erste Dicke (D2) ist.

2. Verfahren nach Anspruch 1, wobei die Beschichtung (46) eine Wärmedämmbeschichtung umfasst.

3. Verfahren nach Anspruch 2, wobei die Beschichtung (46) Yttriumoxid-stabilisiertes Zirkoniumdioxid umfasst.

4. Verfahren nach einem der vorhergehenden Ansprüche, wobei die Beschichtung (46) eine Haftbeschichtung umfasst.

5. Verfahren nach Anspruch 4, wobei die Beschichtung (46) umfasst: Platin oder Platinaluminid oder MCrAIY, wobei M eines oder eine Kombination von Nickel, Kobalt und Eisen ist.

6. Verfahren nach einem der vorhergehenden Ansprüche, ferner umfassend:
Empfangen von Informationen über die Positionierung des ersten Schaufelprofils (30), des zweiten Schaufelprofils (32), der ersten Plattform (34) und der zweiten Plattform (36) nach dem Steuern des maschinellen Bearbeitens; und Bestimmen der Durchlassfläche (42) unter Verwendung der empfangenen Informationen.

7. Verfahren nach einem der vorhergehenden Ansprüche, ferner umfassend Steuern der Bereitstellung einer Beschichtung (46) an mindestens einem von dem ersten Schaufelprofil (30) und dem zweiten Schaufelprofil (32) nach dem Steuern des maschinellen Bearbeitens, um die Durchlassfläche (42) zu reduzieren.

8. Verfahren nach einem der vorhergehenden Ansprüche, ferner umfassend Steuern der Bereitstellung eines Objekts (62) an der ersten Plattform (34) und/oder der zweiten Plattform (36) und/oder dem ersten Schaufelprofil (30), und/oder dem zweiten Schaufelprofil (32).

9. Verfahren nach Anspruch 8, wobei das Steuern der Bereitstellung des Objekts (62) vor dem Steuern der Bereitstellung der Beschichtung (46) durchgeführt wird und ferner Steuern der Bereitstellung der Beschichtung (46) an dem Objekt (62) umfassend.

10. Vorrichtung (10) zum Reparieren eines Schaufelprofils eines Gasturbinentriebwerks, wobei die Vorrichtung umfasst: eine Steuerung (12), eine Werkzeugmaschine (14), einen Sensor (16) und eine Beschichtungsvorrichtung (18), die dazu konfiguriert sind, das Verfahren nach einem der vorhergehenden Ansprüche durchzuführen.

11. Computerprogramm (24), das beim Lesen durch einen Computer bewirkt, dass die Vorrichtung nach Anspruch 10 das Verfahren nach einem der Ansprüche 1 bis 9 durchführt.

## Revendications

1. Procédé de réparation d'une partie (29) d'un moteur à turbine à gaz, la partie comprenant un premier profil aérodynamique (30), un second profil aérodynamique (32), une première plate-forme (34) et une seconde plate-forme (36), le procédé comprenant :
la commande de l'usinage d'au moins un parmi : le premier profil aérodynamique (30) et le second profil aérodynamique (32) ; **caractérisé par**
l'usinage amenant une augmentation d'une zone d'étranglement (42) définie par
le premier profil aérodynamique (30), le second profil aérodynamique (32), la première plate-forme (34) et la seconde plate-forme (36), le premier profil aérodynamique (30) et le second profil aérodynamique (32) étant agencés pour se coupler à la première plate-forme (34) et à la seconde plate-forme (36), la première plate-forme (34) comprenant un corps (44) et un revêtement (46), le revêtement (46) comportant une première épaisseur (D2) ;
la fourniture d'un revêtement à partir d'un appareil de revêtement sélectionné dans le groupe comprenant un appareil de pulvérisation thermique, un appareil de pulvérisation à plasma d'air, un appareil de galvanoplastie, un appareil de dépôt physique en phase vapeur par faisceau d'électrons, un appareil de revêtement à flamme oxygène-carburant à haute vitesse ; et
la commande de la fourniture du revêtement sur la première plate-forme (34) suite à la commande de l'usinage pour former le revêtement (46) de la première plate-forme (34) avec une seconde épaisseur (D2') et réduire la zone d'étranglement (42), la seconde épaisseur (D2') étant supérieure à la première épaisseur (D2).

2. Procédé selon la revendication 1, ledit revêtement (46) comprenant un revêtement barrière thermique.

3. Procédé selon la revendication 2, ledit revêtement (46) comprenant de la zircone stabilisée à l'oxyde d'yttrium.

4. Procédé selon l'une quelconque des revendications précédentes, ledit revêtement (46) comprenant un revêtement de liaison.

5. Procédé selon la revendication 4, ledit revêtement (46) comprenant : du platine, ou de l'aluminure de platine, ou MCrAlY, où M est l'un du nickel, du cobalt et du fer ou une combinaison quelconque de ceux-ci.

6. Procédé selon l'une quelconque des revendications précédentes, comprenant en outre : la réception d'informations sur le positionnement du premier profil aérodynamique (30), du second profil aérodynamique (32), de la première plate-forme (34) et de la seconde plate-forme (36) après la commande de l'usinage ; et la détermination de la zone d'étranglement (42) à l'aide des informations reçues.

7. Procédé selon l'une quelconque des revendications précédentes, comprenant en outre la commande de la fourniture d'un revêtement (46) sur au moins l'un du premier profil aérodynamique (30) et du second profil aérodynamique (32) après la commande de l'usinage pour réduire la zone d'étranglement (42).

8. Procédé selon l'une quelconque des revendications précédentes, comprenant en outre la commande de fourniture d'un objet (62) à la première plate-forme (34) et/ou à la seconde plate-forme (36) et/ou au premier profil aérodynamique (30), et/ou au second profil aérodynamique (32).

9. Procédé selon la revendication 8, ladite commande de fourniture de l'objet (62) étant effectuée avant la commande de fourniture du revêtement (46), et comprenant en outre la commande de fourniture du revêtement (46) à l'objet (62).

10. Appareil (10) destiné à réparer un profil aérodynamique d'un moteur à turbine à gaz, l'appareil comprenant : un dispositif de commande (12), une machine-outil (14), un capteur (16) et un appareil de revêtement (18) conçus pour exécuter le procédé selon l'une quelconque des revendications précédentes.

11. Programme informatique (24) qui, lorsqu'il est lu par un ordinateur, amène l'appareil de la revendication 10 à réaliser le procédé selon l'une quelconque des revendications 1 à 9.
